# FASCICULE DE BREVET EUROPEEN

(11) **EP 3 732 089 B1**
(45) Date de publication et mention de la délivrance du brevet: **01.12.2021**
(21) Numéro de dépôt: 18808414.9
(22) Date de dépôt: 09.10.2018
(51) Int. Cl.: B62D 25/08, B60R 19/12, B60R 19/18, B60R 21/34

(54) **VÉHICULE COMPRENANT UN ABSORBEUR INFÉRIEUR DE DISPOSITIF DE PARE-CHOCS AVANT**
FAHRZEUG MIT EINEM UNTEREREN ABSORBER EINER VORDEREN STOSSFÄNGERVORRICHTUNG
VEHICLE COMPRISING A LOWER ABSORBER OF A FRONT BUMPER DEVICE

(30) Priorité: 17.10.2017 FR 1759725
(43) Date de publication de la demande: 04.11.2020
(73) Titulaire: PSA Automobiles SA, 78300 Poissy (FR)
(72) Inventeur: BOUDAN, Julien, 91210 Draveil (FR); GOUHINEC, Jean Paul, 78000 Versailles (FR)
(86) Numéro de dépôt international: PCT/FR2018/052484
(87) Numéro de publication internationale: WO 2019/077226

(56) Documents cités:
- EP-A1- 3 141 434
- EP-A2- 1 241 080
- DE-A1-102010 036 440
- US-A1- 2008 001 433
- US-A1- 2009 115 205

## Description

L'invention se situe dans le domaine des absorbeurs de dispositif de pare-chocs avant, et concerne plus particulièrement un absorbeur inférieur d'un dispositif de pare-chocs avant ainsi que les véhicules comprenant de tels absorbeurs.

De nos jours, les véhicules automobiles doivent satisfaire de plus en plus d'exigences en matière de sécurité, notamment de sécurité passive. Les moyens mis en œuvre doivent notamment permettre de protéger les occupants d'un véhicule, par exemple lors d'un choc frontal à haute vitesse. Ils doivent également permettre de maîtriser les coûts de réparation du véhicule lors d'un choc de type urbain, c'est-à-dire à faible vitesse, tout en protégeant les éventuels piétons dans une telle collision.

Les véhicules sont généralement équipés d'un dispositif de pare-chocs avant comprenant deux parties, une partie dite « voie haute » et une partie dite « voie basse », recouvertes par une peau de pare-chocs définissant la façade avant du véhicule. La voie haute permet de dissiper une partie de l'énergie en cas de choc et dirige le reste en arrière en direction des brancards du véhicule. Ces brancards sont deux éléments de structure s'étendant selon la direction longitudinale du véhicule de part et d'autre du moteur. Une poutre de pare-chocs est fixée en avant de ces brancards par l'intermédiaire d'absorbeurs supérieurs (ou « crash-boxes »). Ces absorbeurs sont configurés pour être comprimés en cas de choc frontal du véhicule de manière à absorber les efforts.

Deux goussets de brancard peuvent être intercalés entre les extrémités avant des brancards et les absorbeurs supérieurs. Ces goussets supportent un bloc façade avant s'étendant transversalement dans le véhicule et fermant en avant le compartiment moteur. Ce bloc façade avant a pour fonction de réguler la température du moteur à l'aide d'un système de refroidissement. Il est généralement composé d'une armature portant un échangeur thermique, tel qu'un radiateur de circuit de refroidissement de moteur ou de circuit de refroidissement d'air de suralimentation, ou encore un condensateur de circuit de climatisation de l'habitacle.

La voie basse du dispositif de pare-chocs est, quant à elle, positionnée au niveau du déflecteur central de la peau de pare-chocs avant du véhicule. Cette voie basse a pour fonction de « fouetter » le bas d'une jambe d'un piéton afin d'éviter que ce dernier ne passe en dessous du véhicule lors d'un choc urbain. La voie basse du dispositif peut se présenter sous diverses formes. Des exemples de voie basse sont présentés par le document FR2791311 . De manière connue, la voie basse du dispositif comprend deux absorbeurs latéraux (ou « crash-boxes ») fixés dans la partie inférieure des goussets de brancard. Une poutre de pare-chocs inférieure en métal peut être agencée en avant des deux absorbeurs latéraux d'un côté à l'autre du véhicule. Cependant, une telle poutre en métal présente des risques importants de fracturer le tibia d'un piéton lors d'un choc frontal. Dès lors, il est connu de remplacer cette poutre en métal par un absorbeur inférieur en matériau plastique ou composite, s'étendant d'un côté à l'autre du véhicule.

Lors d'un choc frontal entre le véhicule et un obstacle, l'absorbeur inférieur va prendre appui sur les deux absorbeurs latéraux qui vont s'écraser pour absorber l'effort. L'absorbeur inférieur s'écrase également pour participer à l'absorption des efforts du choc. L'écrasement des absorbeurs latéraux et de l'absorbeur inférieur déplacent ce dernier en arrière en direction du système de refroidissement. Il y a alors un risque que l'absorbeur inférieur entre en contact avec le système de refroidissement et l'endommage. De tels dommages sont responsables d'une augmentation des coûts de réparation du véhicule. Il y a donc un besoin pour limiter les dommages causés par l'absorbeur inférieur au système de refroidissement, voire empêcher que l'absorbeur inférieur n'endommage le système de refroidissement. Document EP1241080 A2 décrit un véhicule selon le préambule de la revendication 1.

L'invention a pour objectif de répondre à au moins un des problèmes rencontrés par l'art antérieur en proposant un nouveau véhicule configuré pour dévier le déplacement de l'absorbeur inférieur lors d'un choc frontal.

A cet effet, l'invention a pour objet un véhicule comprenant, en partie avant, deux goussets disposés chacun d'un côté dudit véhicule, un système de refroidissement s'étendant entre les deux goussets et un dispositif de pare-chocs avant s'étendant en avant desdits goussets, ledit dispositif de pare-chocs comprenant une partie supérieure comprenant une poutre de pare-chocs, et une partie inférieure comprenant un absorbeur inférieur s'étendant d'un côté à l'autre du véhicule, le véhicule étant remarquable en ce que l'absorbeur inférieur présente une face arrière comprenant au moins une rampe sous la forme d'une surface inclinée orientée de bas en haut et en direction de l'avant du véhicule, ladite rampe étant disposée au moins en partie en regard du système de refroidissement.

Comme on l'aura compris à la lecture de la définition qui vient d'en être donnée, l'invention propose de configurer l'arrière de l'absorbeur inférieur de sorte que ce dernier soit dévié vers le bas lorsqu'il entre en contact avec le système de refroidissement suite à un choc frontal. La ou les rampes agissent en tant que guides pour l'absorbeur inférieur de manière à le faire passer sous le système de refroidissement. Ainsi, les efforts transmis au système de refroidissement sont diminués. L'invention permet avantageusement de limiter les coûts de réparation lors d'un choc frontal de type urbain.

Selon des modes particuliers de réalisation, l'absorbeur inférieur peut comprendre l'une ou l'autre des caractéristiques suivantes, prises isolément ou selon toutes les combinaisons possibles :
- Le système de refroidissement montrant une face avant présentant un bord inférieur, la ou au moins une des rampes est disposée en regard dudit bord inférieur de la face avant du système de refroidissement. De préférence, la ou au moins une des rampes comprend un bord inférieur disposé plus proche du sol que le bord inférieur de la face avant du système de refroidissement, de sorte à présenter une partie inférieure qui n'est pas en regard du système de refroidissement et une partie supérieure en regard dudit système de refroidissement. Ainsi, l'absorbeur inférieur est mieux dévié lorsqu'il entre en contact avec le système de refroidissement.
- La face arrière de l'absorbeur inférieur présentant un bord supérieur, la ou au moins une des rampes comprend un bord supérieur correspondant au bord supérieur de la face arrière de l'absorbeur inférieur. Cette configuration permet d'éviter que la partie supérieure de la face arrière de l'absorbeur arrière ne gêne sa déviation par la ou les rampes lors d'un choc frontal.
- La ou au moins une des rampes présente une forme allongée disposée selon l'axe transversal du véhicule. De préférence, le système de refroidissement montrant une face avant présentant un bord inférieur au niveau duquel est monté au moins un joint, la ou au moins une desdites rampes est disposée en regard du ou d'un des joints. De préférence encore, la longueur de la ou d'au moins une desdites rampes est au moins égale à celle du joint disposé en regard. La configuration de la rampe permet de limiter les dommages causés au joint, voire d'en préserver son intégrité, réduisant les coûts de réparation.
- La ou au moins une des rampes présente une forme allongée disposée selon l'axe longitudinal du véhicule. De préférence, la ou au moins une des rampes est portée par une nervure.
- le système de refroidissement montrant une face avant présentant un bord inférieur, ledit système de refroidissement comprend au moins une rampe sous la forme d'une surface inclinée orientée de bas en haut et en direction de l'avant du véhicule, ladite rampe étant disposée au niveau du bord inférieur de la face avant. De préférence, la ou au moins une des rampes du système de refroidissement est disposée en regard de la ou d'une des rampes de l'absorbeur inférieur.
- La forme de la ou d'au moins une des rampes suit le galbe de l'absorbeur inférieur.
- L'absorbeur inférieur comprend au moins deux rampes et au moins deux des rampes sont parallèles entre elles.

Selon un mode particulier de réalisation, l'absorbeur inférieur comprenant un corps, la ou au moins une rampe est portée par une extension s'étendant en arrière depuis le corps. La ou les rampes peuvent ainsi guider l'absorbeur inférieur au plus tôt lors de la cinématique du choc frontal. En outre, la présence de telles extensions permet de ne pas modifier la structure du corps de l'absorbeur inférieur et donc ses capacités à absorber les efforts.

De préférence, la ou au moins une des extensions est venue de matière avec le corps de l'absorbeur inférieur.

Alternativement ou de manière complémentaire, la ou au moins une des extensions est fixée au corps de l'absorbeur inférieur. De préférence, la fixation est réalisée par clippage ou par collage. De préférence encore, la ou au moins une des extensions est en métal, en matériau plastique ou en matériau composite. Lorsqu'elles sont en métal, les extensions sont avantageusement plus rigides, diminuant les risques de déformation lors du guidage de l'absorbeur inférieur, assurant ainsi un meilleur guidage.

L'invention concerne également un absorbeur inférieur pour un dispositif de pare-chocs d'un véhicule tel que défini plus haut, ledit absorbeur inférieur étant destiné à s'étendre d'un côté à l'autre du véhicule et en avant de deux goussets de brancard et d'un système de refroidissement, l'absorbeur inférieur étant remarquable en ce qu'il présente une face arrière comprenant au moins une rampe sous la forme d'une surface inclinée destinée à être orientée de bas en haut et en direction de l'avant du véhicule et à être disposée au moins en partie en regard du système de refroidissement lorsque ledit absorbeur est monté dans le véhicule.

L'invention concerne également un système de refroidissement pour un véhicule tel que défini plus haut, ledit système montrant une face avant présentant un bord inférieur, remarquable en ce qu'il comprend au moins une rampe sous la forme d'une surface inclinée orientée de bas en haut et en direction de l'avant du véhicule, ladite rampe étant disposée au niveau dudit bord inférieur de sa face avant.

L'invention sera bien comprise et d'autres aspects et avantages apparaîtront clairement à la lecture de la description qui suit, donnée à titre d'exemple en référence à la planche de dessins annexée sur laquelle :
- La figure 1 représente une vue arrière d'un absorbeur inférieur selon l'invention
- Les figures 2 et 3 représentent deux vues en coupes, respectivement avant et pendant un choc frontal, d'une partie avant inférieure d'un véhicule selon l'invention comprenant un absorbeur inférieur selon l'invention et un système de refroidissement.

Dans la description qui suit, le terme « comprendre » est synonyme de « inclure » et n'est pas limitatif en ce qu'il autorise la présence d'autres éléments dans l'absorbeur inférieur, le système de refroidissement, ou le véhicule auquel il se rapporte. Il est entendu que le terme « comprendre » inclut les termes « consister en ». Les termes « avant » et « arrière » ainsi que les directions « longitudinale » et « transversale » s'entendront par rapport à l'orientation générale du véhicule. Les termes « bas » et « inférieur » indiqueront une proximité avec le sol plus importante que respectivement les termes « haut » et « supérieur ». Sur les différentes figures, les mêmes références désignent des éléments identiques ou similaires.

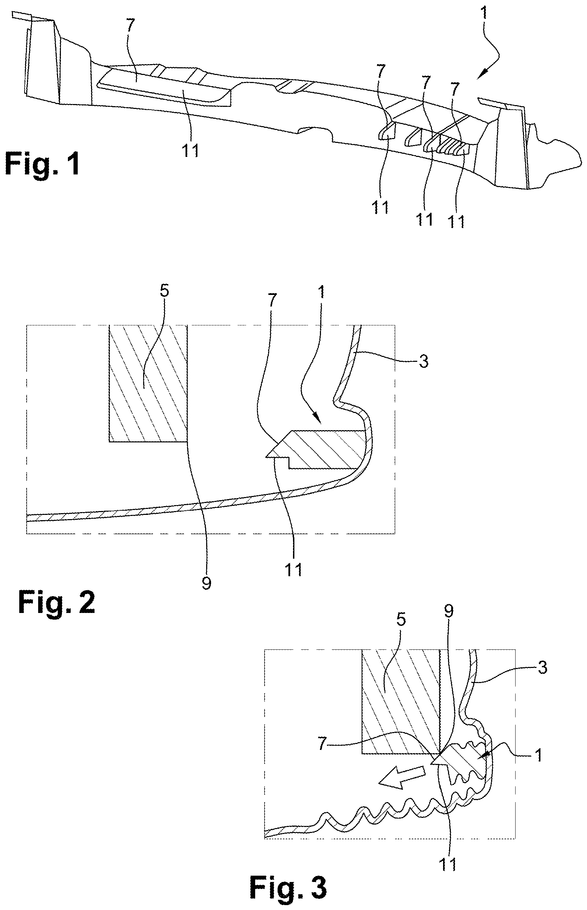

Les dispositifs de pare-chocs avant d'un véhicule comprennent une partie supérieure et une partie inférieure. La partie supérieure est composée de deux absorbeurs supérieurs disposés chacun sur un gousset s'étendant verticalement. Les goussets sont supportés par des éléments de structure appelés brancards s'étendant chacun d'un côté du véhicule et de part et d'autre d'un moteur. Une poutre de pare-chocs est fixée sur les deux absorbeurs supérieurs et s'étend transversalement par rapport au véhicule. La partie inférieure du dispositif de pare-chocs comprend deux absorbeurs latéraux fixés aux goussets et disposés en dessous des absorbeurs supérieurs. En avant de ces absorbeurs latéraux est disposé l'absorbeur inférieur 1 représenté en figure 1 selon sa vue arrière. Cet absorbeur inférieur 1 est formé en un matériau plastique ou composite et configuré pour s'écraser afin d'absorber un effort. Comme on peut le voir, l'absorbeur inférieur 1 comprend un corps de forme allongée présentant une face avant et une face arrière et qui, lorsqu'il est monté dans le véhicule, s'étend transversalement d'un absorbeur latéral à l'autre. Une peau de pare-chocs 3 (visible aux figures 2 et 3) recouvre la poutre de pare-chocs et l'absorbeur inférieur 1 et forme la façade avant du véhicule.

Comme on peut le voir sur la figure 2, qui représente une coupe d'une partie avant d'un véhicule préalablement à un choc frontal, l'absorbeur inférieur 1 peut être fixé par sa face avant à la peau de pare-chocs 3. L'absorbeur inférieur peut alors être simplement en contact en arrière avec les deux absorbeurs latéraux, au niveau de chaque extrémité du corps. Ce contact peut se faire notamment à l'aide de deux plats verticaux. Alternativement, l'absorbeur inférieur peut être fixé aux deux absorbeurs latéraux. Les absorbeurs latéraux font office d'appuis pour l'absorbeur inférieur lors d'un choc frontal du véhicule.

Un système de refroidissement 5 est supporté par les deux goussets, et s'étend entre lesdits goussets en arrière du dispositif de pare-chocs. Sur la figure 3, qui représente cette même partie avant lors d'un choc frontal, on peut voir que l'absorbeur inférieur 1 est déformé par écrasement pour absorber l'énergie du choc. Cet écrasement déplace ledit absorbeur 1 en arrière en direction dudit système de refroidissement 5.

Le véhicule est remarquable en ce que l'absorbeur inférieur 1 présente une face arrière comprenant au moins une rampe 7 sous la forme d'une surface inclinée orientée de bas en haut et en direction de l'avant du véhicule, ladite surface inclinée étant disposée au moins en partie en regard du système de refroidissement 5. Ainsi, et comme il est représenté en figure 3, lors du choc frontal, l'absorbeur inférieur 1 est dévié vers le bas lorsqu'il percute le système de refroidissement 5. L'absorbeur inférieur 1 vient passer sous ledit système 5 par le contact des rampes 7 avec le bord inférieur de la face avant dudit système 5. Les dommages que subit le système de refroidissement 5 sont alors diminués, et par conséquent les coûts de réparation. De préférence, la forme de la ou d'au moins une des rampes 7 suit le galbe de l'absorbeur inférieur 1. En outre, l'absorbeur inférieur 1 peut comprendre au moins deux rampes 7 et les deux ou au moins deux des rampes 7 sont parallèles entre elles.

De préférence, la ou au moins une des rampes 7 est disposée en regard du bord inférieur 9 du système de refroidissement 5, de manière à faciliter le guidage. Selon un mode de réalisation visible sur la figure 2, la ou au moins une des rampes 7 présente un bord inférieur qui est plus proche du sol que le bord inférieur 9 de la face avant du système de refroidissement 5. En ce sens, la partie inférieure de ladite rampe 7 n'est pas en regard du système de refroidissement 5, contrairement à la partie supérieure. Cette position relative des bords inférieurs dudit système 5 et de la ou desdites rampes 7 améliore encore le guidage de l'absorbeur inférieur 1. En outre, l'absorbeur central est dévié au plus tôt lors du choc frontal.

En revenant sur la figure 1, on peut voir que la ou les rampes 7 sont de préférence disposées en partie haute de la face arrière de l'absorbeur inférieur 1. Plus particulièrement, La ou au moins une des rampes a son bord supérieur aligné avec le bord supérieur de l'absorbeur. Une telle configuration permet de limiter les dommages causés au système de refroidissement 5. Sur cette figure 1, on peut voir également que la ou au moins une des rampes 7 peut présenter une forme allongée selon l'axe longitudinal de l'absorbeur inférieur 1. Lorsque l'absorbeur est monté dans le véhicule, la longueur de cette rampe 7 est disposée selon l'axe transversal du véhicule. Une telle rampe permet un appui large sur le bord inférieur de la face avant du système de refroidissement pour guider l'absorbeur inférieur. De préférence, ladite ou lesdites rampes sont disposées respectivement en regard d'un joint monté au niveau du bord inférieur de la face avant du système de refroidissement. De préférence encore, la longueur d'une rampe en regard d'un joint est au moins égale à celle dudit joint. Ces rampes sont ainsi configurées pour limiter voire éviter une dégradation desdits joints lors du guidage de l'absorbeur inférieur, réduisant les coûts de réparation.

Alternativement ou de manière complémentaire, la ou au moins une des rampes 7 peut présenter une forme allongée dont la longueur est disposée selon l'axe longitudinal du véhicule. De préférence, la ou au moins une desdites rampes 7 est portée par une nervure.

Selon un mode de réalisation visible sur la figure 1, la ou au moins une des rampes 7 est portée par une extension 11 s'étendant en arrière depuis le corps de l'absorbeur 1. Les rampes sont ainsi en contact avec le système de refroidissement au plus tôt lors d'un choc. En plaçant les rampes 7 à distance du corps, ce mode de réalisation permet également de ne pas modifier la structure du corps, et donc ses capacités à absorber un effort.

La ou au moins une des extensions 11 peut être venue de matière avec le corps de l'absorbeur 1. Alternativement ou de manière complémentaire, la ou au moins une des extensions 11 est fixée au corps. De préférence, la fixation est réalisée par clippage ou par collage. Cette ou ces extensions 11 peuvent être en métal, en matériau plastique ou en matériau composite.

Le matériau composite sélectionné peut être un matériau composite thermoplastique ou thermodurcissable. Les matériaux composites sont définis dans le cadre de l'invention comme présentant une matrice polymère et un ou plusieurs éléments de renforcement. Les éléments de renforcement comprennent ou sont constitués par des fibres ou un mélange de fibres sélectionnées parmi les fibres de verre, de carbone, de céramique, de graphite, naturelles telles que des fibres de lin, de chanvre ou de bambou, de polymères organiques tels que des fibres de polyester. De préférence les fibres des éléments de renforcement sont des fibres de verre.

La matrice polymère thermoplastique sera avantageusement sélectionnée parmi un ou plusieurs matériaux choisis entre les polypropylènes (PP), les polyphtalamides (PPA), les polyétheréthercétones (PEEK), les polysulfures de phénylène (PPS), les polyamides-imide (PAI), les polyétherimides (PEI), les polyarylamides (PAA), ou les polyamides (PA) tel que par exemple du polyamide 6 (PA 6 ou polycaprolactame) ou du polyamide 6.6 (PA 6.6 ou polyhexaméthylène adipamide).

La matrice polymère thermodurcissable sera avantageusement sélectionnée parmi les polyesters insaturés, les polyuréthanes, les vinylesters ou les polyépoxydes.

Lorsqu'elles sont formées en métal, les extensions 11 sont de préférence en acier ou en aluminium.

Selon un mode de réalisation non représenté de l'invention, le système de refroidissement comprend au moins une rampe sous la forme d'une surface inclinée orientée de bas en haut et en direction de l'avant du véhicule, ladite rampe étant disposée au niveau du bord inférieur de sa face avant. De telles rampes facilitent la déviation de l'absorbeur inférieur lors d'un choc frontal. De préférence, la ou au moins une des rampes du système de refroidissement est disposée en regard de la ou d'une des rampes de l'absorbeur inférieur. Un tel positionnement permet à deux rampes de glisser entre elles et facilite encore la déviation de l'absorbeur inférieur.

## Revendications

1. Véhicule comprenant, en partie avant, deux goussets disposés chacun d'un côté dudit véhicule, un système de refroidissement (5) s'étendant entre les deux goussets et un dispositif de pare-chocs avant s'étendant en avant desdits goussets, ledit dispositif de pare-chocs comprenant une partie supérieure comprenant une poutre de pare-chocs, et une partie inférieure comprenant un absorbeur inférieur (1) s'étendant d'un côté à l'autre du véhicule, l'absorbeur inférieur (1) présentant une face arrière comprenant au moins une rampe (7) sous la forme d'une surface inclinée orientée de bas en haut et en direction de l'avant du véhicule, ladite rampe (7) étant disposée au moins en partie en regard du système de refroidissement (5), le véhicule étant **caractérisé en ce que** le système de refroidissement (5) montrant une face avant présentant un bord inférieur (9) de la face avant, la ou au moins une des rampes (7) est disposée en regard dudit bord inférieur (9) et comprend un bord inférieur disposé plus proche du sol que le bord inférieur (9) de la face avant du système de refroidissement (5), de sorte à présenter une partie inférieure qui n'est pas en regard du système de refroidissement (5) et une partie supérieure en regard dudit système de refroidissement (5).

2. Véhicule selon la revendication 1, la face arrière de l'absorbeur inférieur (1) présentant un bord supérieur, **caractérisé en ce que** la ou au moins une des rampes (7) comprend un bord supérieur correspondant au bord supérieur de la face arrière de l'absorbeur inférieur (1).

3. Véhicule selon l'une des revendications 1 à 2, **caractérisé en ce que** la ou au moins une des rampes (7) présente une forme allongée disposée selon l'axe transversal du véhicule.

4. Véhicule selon la revendication 3, le système de refroidissement (5) montrant une face avant présentant un bord inférieur (9) au niveau duquel est monté au moins un joint, **caractérisé en ce que** la ou au moins une desdites rampes (7) est disposée en regard du la ou d'un des joints, de préférence la longueur de ou d'au moins une desdites rampes (7) est au moins égale à celle du joint disposé en regard.

5. Véhicule selon l'une des revendications 1 à 4, **caractérisé en ce que** la ou au moins une des rampes (7) présente une forme allongée disposée selon l'axe longitudinal du véhicule, de préférence la ou au moins une des rampes (7) est portée par une nervure.

6. Véhicule selon l'une des revendications 1 à 5, l'absorbeur inférieur (1) comprenant un corps, **caractérisé en ce que** la ou au moins une des surfaces inclinée est portée par une extension (11) s'étendant en arrière depuis le corps.

7. Véhicule selon l'une des revendications 1 à 6, le système de refroidissement (5) montrant une face avant présentant un bord inférieur, **caractérisé en ce que** ledit système de refroidissement (5) comprend au moins une rampe sous la forme d'une surface inclinée orientée de bas en haut et en direction de l'avant du véhicule, ladite rampe étant disposée au niveau du bord inférieur de sa fac avant, de préférence la ou au moins une des rampes du système de refroidissement (5) est disposée en regard de la ou d'une des rampes (7) de l'absorbeur inférieur (1).

8. Absorbeur inférieur (1) pour un dispositif de pare-chocs d'un véhicule selon l'une des revendications 1 à 7, ledit absorbeur inférieur (1) étant destiné à s'étendre d'un côté à l'autre du véhicule et en avant de deux goussets de brancard et d'un système de refroidissement (5), l'absorbeur inférieur (1) étant **caractérisé en ce qu'**il présente une face arrière comprenant au moins une rampe (7) sous la forme d'une surface inclinée destinée à être orientée de bas en haut et en direction de l'avant du véhicule et à être disposée au moins en partie en regard du système de refroidissement (5) lorsque ledit absorbeur est monté dans le véhicule.

9. Système de refroidissement (5) pour un véhicule selon la revendication 7, ledit système (5) montrant une face avant présentant un bord inférieur (9), **caractérisé en ce qu'**il comprend au moins une rampe sous la forme d'une surface inclinée orientée de bas en haut et en direction de l'avant du véhicule, ladite rampe étant disposée au niveau dudit bord inférieur de sa face avant.

## Patentansprüche

1. Fahrzeug, das im vorderen Teil zwei Zwickel aufweist, die jeweils auf einer Seite des Fahrzeugs angeordnet sind, ein Kühlsystem (5), das sich zwischen den beiden Zwickeln erstreckt, und eine vordere Stoßfängervorrichtung, die sich vor den Zwickeln erstreckt, wobei die Stoßfängervorrichtung einen oberen Teil mit einem Stoßfängerträger und einen unteren Teil mit einem unteren Absorber (1) aufweist, der sich von einer Seite des Fahrzeugs zur anderen erstreckt, wobei der untere Absorber (1) eine hintere Fläche aufweist, die mindestens eine Rampe (7) in Form einer geneigten Fläche aufweist, die von unten nach oben und in Richtung zur Vorderseite des Fahrzeugs gerichtet ist, wobei die Rampe des Fahrzeugs die Rampe umfasst, wobei pe (7) zumindest teilweise gegenüber dem Kühlsystem (5) angeordnet ist, wobei das Fahrzeug **dadurch gekennzeichnet ist, dass** das Kühlsystem (5) eine Vorderseite aufweist, die einen unteren Rand (9) der Vorderseite aufweist, die mindestens eine der Rampen (7) gegenüber dem unteren Rand (9) angeordnet ist und einen unteren Rand aufweist, der näher am Boden angeordnet ist als der untere Rand (9) der Vorderseite des Kühlsystems (5), sodass ein unterer Teil, der nicht gegenüber dem Kühlsystem (5) liegt, und ein oberer Teil gegenüber dem Kühlsystem (5) vorgesehen ist.

2. Fahrzeug nach Anspruch 1, wobei die Rückseite des unteren Absorbers (1) einen oberen Rand aufweist, **dadurch gekennzeichnet, dass** die oder mindestens eine der Rampen (7) einen oberen Rand aufweist, der dem oberen Rand der Rückseite des unteren Absorbers (1) entspricht.

3. Fahrzeug nach einem der Ansprüche 1 bis 2, **dadurch gekennzeichnet, dass** die oder mindestens eine der Rampen (7) eine längliche Form aufweist, die entlang der Querachse des Fahrzeugs angeordnet ist.

4. Fahrzeug, das im vorderen Teil zwei Zwickel aufweist, die jeweils auf einer Seite des Fahrzeugs angeordnet sind, ein Kühlsystem (5), das sich zwischen den beiden Zwickeln erstreckt, und eine vordere Stoßfängervorrichtung, die sich vor den Zwickeln erstreckt, wobei die Stoßfängervorrichtung einen oberen Teil mit einem Stoßfängerträger und einen unteren Teil mit einem unteren Absorber (1) aufweist, der sich von einer Seite des Fahrzeugs zur anderen erstreckt, wobei der untere Absorber (1) eine hintere Fläche aufweist, die mindestens eine Rampe (7) in Form einer geneigten Fläche aufweist, die von unten nach oben und in Richtung zur Vorderseite des Fahrzeugs gerichtet ist, wobei die Rampe des Fahrzeugs die Rampe umfasst, wobei pe (7) zumindest teilweise gegenüber dem Kühlsystem (5) angeordnet ist, wobei das Fahrzeug **dadurch gekennzeichnet ist, dass** das Kühlsystem (5) eine Vorderseite aufweist, die einen unteren Rand (9) der Vorderseite aufweist, die mindestens eine der Rampen (7) gegenüber dem unteren Rand (9) angeordnet ist und einen unteren Rand aufweist, der näher am Boden angeordnet ist als der untere Rand (9) der Vorderseite des Kühlsystems (5), sodass ein unterer Teil, der nicht gegenüber dem Kühlsystem (5) liegt, und ein oberer Teil gegenüber dem Kühlsystem (5) vorgesehen ist.

5. Fahrzeug nach Anspruch 1, wobei die Rückseite des unteren Absorbers (1) einen oberen Rand aufweist, **dadurch gekennzeichnet, dass** die oder mindestens eine der Rampen (7) einen oberen Rand aufweist, der dem oberen Rand der Rückseite des unteren Absorbers (1) entspricht.

6. Fahrzeug nach einem der Ansprüche 1 bis 2, **dadurch gekennzeichnet, dass** die oder mindestens eine der Rampen (7) eine längliche Form aufweist, die entlang der Querachse des Fahrzeugs angeordnet ist.

7. Fahrzeug nach einem der Ansprüche 1 bis 6, wobei das Kühlsystem (5) eine Vorderseite mit einem unteren Rand aufweist, **dadurch gekennzeichnet, dass** das Kühlsystem (5) mindestens eine Rampe in Form einer geneigten Fläche umfasst, die von unten nach oben und in Richtung der Vorderseite des Fahrzeugs ausgerichtet ist, wobei die Rampe auf Höhe des unteren Randes ihrer Vorderseite angeordnet ist, wobei vorzugsweise die oder mindestens eine der Rampen des Kühlsystems (5) gegenüber der oder einer der Rampen (7) des unteren Absorbers (1) angeordnet ist.

8. Unterer Absorber (1) für eine Stoßfängervorrichtung eines Fahrzeugs nach einem der Ansprüche 1 bis 7, wobei der untere Absorber (1) dazu bestimmt ist, sich von einer Seite des Fahrzeugs zur anderen und vor zwei Tragbacken und einem Kühlsystem (5) zu erstrecken, wobei der untere Absorber (1) **dadurch gekennzeichnet ist, dass** er eine Rückseite aufweist, die mindestens eine Rampe (7) in Form einer geneigten Oberfläche aufweist, die dazu bestimmt ist, von unten nach oben und in Richtung der Vorderseite des Fahrzeugs ausgerichtet zu sein und zumindest teilweise gegenüber dem Kühlsystem (5) angeordnet zu sein, wenn der Absorber (5) im Fahrzeug eingebaut ist.

9. Kühlsystem (5) für ein Fahrzeug nach Anspruch 7, wobei das System (5) eine Vorderseite mit einem unteren Rand (9) aufweist, **dadurch gekennzeichnet, dass** es mindestens eine Rampe in Form einer geneigten Oberfläche aufweist, die von unten nach oben und in Richtung der Vorderseite des Fahrzeugs ausgerichtet ist, wobei die Rampe auf der Höhe des unteren Randes ihrer Vorderseite angeordnet ist.

## Claims

1. A vehicle comprising, in the front part, two gussets each disposed on one side of said vehicle, a cooling system (5) extending between the two gussets and a front bumper device extending in front of said gussets, said bumper device comprising an upper part comprising a bumper beam, and a lower part comprising a lower absorber (1) extending from one side to the other of the vehicle, the lower absorber (1) having a rear face comprising at least one ramp (7) in the form of an inclined surface oriented upwards and in the direction of the front of the vehicle, said ramp pe (7) being disposed at least partially opposite the cooling system (5), the vehicle being **characterized in that** the cooling system (5) having a front face having a lower edge (9) of the front face, the or at least one of the ramps (7) is disposed opposite said lower edge (9) and comprises a lower edge disposed closer to the ground than the lower edge (9) of the front face of the cooling system (5), so as to have a lower part which is not facing the cooling system (5) and an upper part facing said cooling system (5).

2. Vehicle according to claim 1, wherein the rear face of the lower absorber (1) has an upper edge, **characterized in that** the or at least one of the ramps (7) comprises an upper edge corresponding to the upper edge of the rear face of the lower absorber (1).

3. Vehicle according to one of Claims 1 to 2, **characterized in that** the or at least one of the ramps (7) has an elongated shape arranged along the transverse axis of the vehicle.

4. Vehicle according to claim 3, the cooling system (5) having a front face having a lower edge (9) at which at least one seal is mounted, **characterized in that** the or at least one of said ramps (7) is disposed opposite the or one of the seals, preferably the length of or at least one of said ramps (7) is at least equal to that of the seal disposed opposite.

5. Vehicle according to one of Claims 1 to 4, **characterized in that** the or at least one of the ramps (7) has an elongated shape arranged along the longitudinal axis of the vehicle, preferably the or at least one of the ramps (7) is carried by a rib.

6. Vehicle according to one of claims 1 to 5, wherein the lower absorber (1) comprises a body, **characterized in that** the or at least one of the inclined surfaces is carried by an extension (11) extending backwards from the body.

7. Vehicle according to one of claims 1 to 6, wherein the cooling system (5) has a front face with a lower edge, **characterized in that** said cooling system (5) comprises at least one ramp in the form of an inclined surface oriented from bottom to top and towards the front of the vehicle, said ramp being arranged at the lower edge of its front face, preferably the or at least one of the ramps of the cooling system (5) is arranged facing the or one of the ramps (7) of the lower absorber (1).

8. Lower absorber (1) for a bumper device of a vehicle according to one of claims 1 to 7, said lower absorber (1) being adapted to extend from one side of the vehicle to the other and in front of two stretcher gussets and a cooling system (5), the lower absorber (1) being **characterized in that** it has a rear face comprising at least one ramp (7) in the form of an inclined surface intended to be oriented upwards and in the direction of the front of the vehicle and to be disposed at least partially opposite the cooling system (5) when said absorber is mounted in the vehicle.

9. Cooling system (5) for a vehicle according to claim 7, said system (5) having a front face having a lower edge (9), **characterized in that** it comprises at least one ramp in the form of an inclined surface oriented from bottom to top and in the direction of the front of the vehicle, said ramp being disposed at said lower edge of its front face.
